Europäisches Patentamt

European Patent Office

Office européen des brevets

(19)

(11)  **EP 0 428 072 B1**

(12)  **EUROPEAN PATENT SPECIFICATION**

(45) Date of publication and mention
of the grant of the patent:
**14.10.1998  Bulletin 1998/42**

(51) Int Cl.⁶: **G03B 17/24**, G03B 27/52,
G03B 27/72

(21) Application number: **90121422.1**

(22) Date of filing: **08.11.1990**

(54) **Method of storing information in a photographic film having a magnetic data storing means**

Verfahren zum Speichern von Informationen in einem fotografischen Film mit magnetischer Datenspeichermöglichkeit

Procédé pour stocker des informations sur une pellicule photographique comportant de moyens magnétiques d'enregistrement de données

(84) Designated Contracting States:
**DE FR GB NL**

(30) Priority: **13.11.1989  JP  131872/89 U**

(43) Date of publication of application:
**22.05.1991  Bulletin 1991/21**

(60) Divisional application: **97117413.1**

(73) Proprietor: **FUJI PHOTO FILM CO., LTD.**
**Kanagawa-ken (JP)**

(72) Inventor: **Ikenoue, Shinpei**
**Minami Ashigara-shi, Kanagawa-ken (JP)**

(74) Representative: **Grünecker, Kinkeldey,**
**Stockmair & Schwanhäusser Anwaltssozietät**
**Maximilianstrasse 58**
**80538 München (DE)**

(56) References cited:
EP-A- 341 077               EP-A- 342 627
EP-A- 357 355               GB-A- 2 141 096
US-A- 3 782 947             US-A- 4 655 570
US-A- 4 780 735             US-A- 4 864 332
US-A- 4 878 075

• PATENT ABSTRACTS OF JAPAN, vol. 11, no. 334 (P-631)[2781], 31st October 1987; & JP-A-62 116 932 (EIKO K.K.) 28-05-1987
• PATENT ABSTRACTS OF JAPAN, vol. 8, no. 27 (P-252)[1464], 4th February 1984; & JP-A-58 182 621 (NIHON KOUGAKU KOGYO K.K.) 26-10-1983
• Ronald E. Uhlig, "Technical Experience with DataKodeú Magnetic Control Surface" in SMPTE-Journal, Vol. 93, No. 8, August 1984, pp 730-745
• Normenausschuss Phototechnik (photonorm) im DIN Deutsches Institut für Normung e.V.: DIN 4510, Teil 4 (Februar 1981) "Bildgrössen und Kopiermasken in der Stehbildphotographie"

# Description

## BACKGROUND OF THE INVENTION

The present invention relates to a method of storing information in a photographic film which can record various kinds of data therein at suitable times.

## RELATED ART STATEMENT

Hitherto, for the purpose of improving the image quality of photographs, optical, magnetic or electrical means have been used to input various kinds of data to a photographic film, such as data about the taking of the photographs including the presence of electronic flash, color temperature, LV value, object distance, focal length, contrast of objects, date and time of photographing, site of photographing, and so on, data about the photographic film used including the kind of photographic film, date film was produced, conditions required when making prints, and so on, and conditions required when performing simultaneous printing, and so on.

For example, Japanese Patent Public Disclosure Nos. 62-50743 and 62-209430 and U.S. Patent No. 4,864,332 and 4 878 075 disclose means for inputting such data to photographic films.

Conventional means for inputting data use only one of the above-mentioned optical, magnetic or electrical means. Therefore, it is quite difficult for the conventional means to input various kinds of data as afore-mentioned to a photographic film in an easy and definite manner at the time a film is produced, the photographing takes place, the film is developed or prints are made.

A film holder for storing a processed photographic film is known from EP-A-0 341 077. The film holder is provided with a film holding section accommodating a processed film and supporting recorded information in electrical, magnetic or optical form. The information stored in the information holding section relates to the printing process (e.g. color correction information or the like).

## OBJECT AND SUMMARY OF THE INVENTION

It is, therefore, the object of the present invention to provide a method of storing information in a photographic film which is capable of storing various kinds of data relating in particular to both the film and single frames to be exposed at suitable times as afore-mentioned.

The present invention is defined by a method of storing information in a photographic film comprising the steps of claim 1. Advantageous embodiments of the present invention are defined in the dependent claims.

A photographic film cartridge with which the method according to the present invention can be executed comprises a cartridge spool carried in the cartridge for rotation about a longitudinal axis or the spool; a film wound into a roll around the spool, the film having frames each of which has an area to be exposed larger than 350 $mm^2$ but smaller than 1200 $mm^2$; an optical data-input region formed in the film having an area larger than 15% of the area of the frame; and magnetic data-input means formed in the film.

The optical data-input region is formed outside the area to be exposed at both edges of the film.

In this specification, the optical data-input region means the region to which data is input by means of LED, for instance, utilizing the photosensitivity of the film. Since all area of a film has the photosensitivity, the area except frames can be used as the optical data-input region. The area of the optical data-input region can be increased by reducing the number of perforations formed in 135 format film. The amount of data to be input to a film can be increased in the case that the film is a color film by inputting data to the film using more than two light sources emitting ligths of different colors. Data can be input to both front and reverse surfaces of the film. Preferably, data is input to the front surface of the film. In addition, data can be input to the film at any time before the film is developed. Preferably, data is input to the film in the process of making the film or in a camera. Preferably, the amount of light used to input data to the film is adjusted in accordance with the degree of the photosensitivity.

It is necessary for the frame to have an area larger than 350 $mm^2$ so as to keep the image quality of the prints good. Preferably, the frame should have an area larger than 350 $mm^2$ but smaller than 1200 $mm^2$ since the area of the optical data-input region decreases if the area of the frame is over 1200 $mm^2$. Preferably, the film should have a width of 35mm in compliance with the present laboratory system.

Conventionally, data about the production of the film has often input to the film in the form of a bar code on the area outside either of the perforations formed at both edges of the film. However, in the case that various kinds of data as well as the production data are intended to be input in the form of the bar code on the film, in the conventional method where data is input only in one row on both edges of the film, enough space for Inputting all the data cannot be provided. Two rows are necessary for data-input space on at least one edge of the film. For this end, it is necessary to increase the ratio of the area of the optical data-input region relative to the area of the frame from 11% to 15%. The ratio of the area of the optical data-input region relative to the area of the frame is now 11%. When other data-input methods than the bar code are adapted, there is little difference in data density between the bar code and the other methods, so that a similar ratio of the optical data-input region relative to the area of the frame is required.

On the other hand, since it is desired that the area of the frame is larger, the preferable upper limit of the ratio of the area of the optical data-input region relative to the area of the frame is determined in due consideration of the above. The upper limit is preferably 30%, and more preferably, 20%.

Alternatively, the area of the optical data-input region can be increased without decreasing the area of the frame by deleting or decreasing the number of perforations of the film having a width of 35mm. In this alternative arrangement, it is preferable to form one to four perforations or notches per frame only for locating a film instead of the conventional perforations. It is more preferable to form one perforation or notch per frame. The intervals between the perforations or notches are preferably longer than 20 mm but shorter than 42 mm.

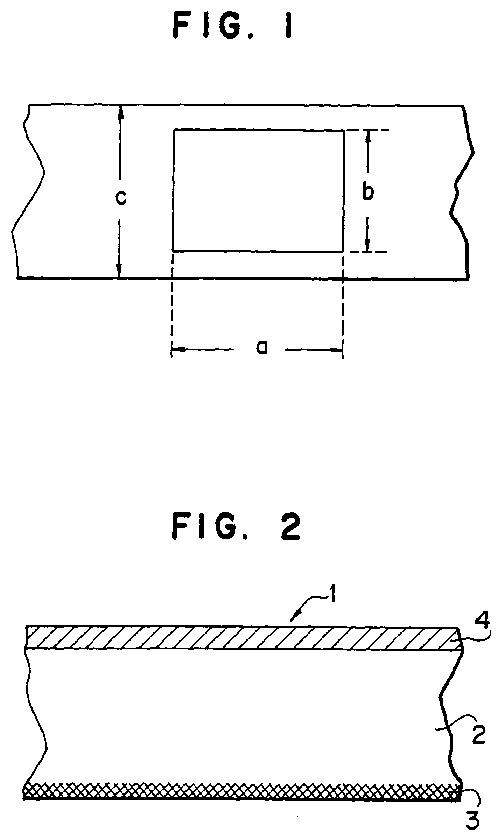

In this specification, the ratio of the area of the optical data-input region relative to the area of the frame is defined as follows. As shown in Fig. 1, assuming that the longitudinal length of the frame is "a", the vertical length of the frame is "b" and the width of the film is "c", the area A of the frame plus the area of the optical data input region, the area B of the region to be exposed and the area C of the optical data-input region are defined as follows.

$$A = a \times c$$

$$B = a \times b$$

$$C = A - B = a \times (c - b)$$

Accordingly, the ratio R of the optical data-input region relative to the frame is defined as follows.

$$R = C / B = ( A - B )/ B = ( c - b )/ b$$

In the photographic film cartridge used in accordance with the present invention, the optical data-input region is preferably formed outside the area to be exposed at the edges of the film. This is because that forming the optical data-input region between the areas to be exposed results in the elongation of the length of the film, which is not advantageous for manufacturing a thinner camera. Furthermore, if the optical data-input regions are formed between the perforations, a quite complex camera structure is required when inputting data to the optical data-input regions and reading data from the same. For these reasons, the optical data-input regions are not formed between the areas to be exposed or between the perforations, but former outside the areas to be exposed.

Data in the form of letters is preferably input to the film in the form of letters or bar codes.

Preferably, optical data-input means utilizing photographic sensitivity is used to input various kinds of data which are to be input when producing films or taking photographs to simplify the process of manufacturing films, miniaturize the camera and reduce costs. However, magnetic data-input means are preferably used when inputting or reading data representing the state of a film, such as whether it is not being used or is already being used, the number of frames used and so on, since it is then unnecessary to develop the film. In addition, magnetic data-input means are preferably used when various kinds of data are input in a laboratory since additional data can be input after developing the film.

In general, the optical data-input means is suitable for inputting data when taking photographs and the magnetic data-input means is suitable for doing the same after developing the film. For instance, it is necessary to keep the relative speeds between a film and a magnetic head constant in order to magnetically input data received from a camera to a film when taking photographs. The camera is required to have a complex structure for accomplishing the above. Accordingly, the optical data-input means utilizing photographic sensitivity is suitable for inputting data when taking photographs because of its reliability and simplicity.

On the other hand, magnetic data-input means are necessarily used after developing the film since optical data-input means utilizing photographic sensitivity cannot be used any more.

For instance, such data are input to the film at a laboratory before developing the film as the name of the laboratory, the date of developing the film and the number of prints, and such data are input to the film at a laboratory after developing the film as the conditions required when prints are made, printer, the number of prints and the conditions for trimming.

A transparent magnetic base disclosed in U.S. Patents Nos. 4,302,523, 3,782,947 and 4,279,945 is preferably used as magnetic data-input means. The transparent magnetic base has two advantages; one is that data concerning specific frame can be input at the position adjacent to the frame, the other is that the optical data-input region can be used as the magnetic data-input region. The magnetic data-input region may be formed only outside the area to be exposed. In this arrangement the magnetic data-input region may be opaque.

In an Alternative to the inevntion, if a cartridge is provided with magnetic data-input means, data concerning the DX code and the state of a film can be input to or output from the magnetic data-input means. Data concerning the consumption state of a film which is input in a cartridge can be advantageously confirmed without taking the film out of the camera. There are many ways to form magnetic data-input means with a cartridge, such as attaching magnetic tape to a cartridge, using a cartridge made of polymer with magnetic material distributed therein to provide a cartridge with a magnetically data-input function, and printing a cartridge with an ink in which magnetic material is distributed.

A light-tight type cartridge such as disclosed in Japanese Utility Model Application No. 1-17253 is preferably used to prevent data input by means of optical data-input means from being eliminated because of light leakage.

The above object and advantageous features of the present invention will be made apparent from the following explanation made with reference to the accompanying drawings.

BRIEF DESCRIPTION OF THE DRAWINGS

Figure 1 is a plain view illustrating areas of optical data-input region and area to be exposed.

Figure 2 is a cross-sectional view of the film used in accordance with the method of the invention.

Figure 3 is a cross-sectional view of the cartridge used in accordance with the method of the invention.

Figure 4 is a perspective view of another type of cartridge usable in a method alternative to the invention.

DESCRIPTION OF THE PREFERRED EMBODIMENTS

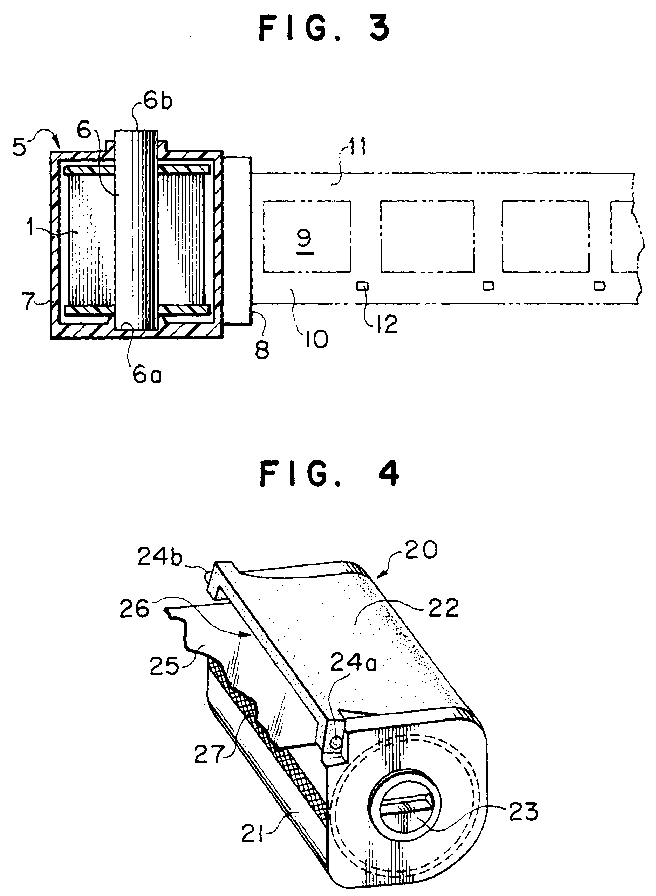

Figures 2 and 3 illustrate a film to be housed in a cartridge and used according to the method of the invention. As shown in Fig. 2, a base 2 of a film 1 is 122 μ in thickness. The base 2 is a cellulose triacetate base, the reverse surface of which is coated with a magnetic material($\gamma$ - $Fe_2O_3$ ) 3 at the rate of 0.1 gram per square meter ( Refer to Japanese Patent Publication No. 57-6576 ).

A sensitive layer 4 is formed for the use of negative color film having 400 value of sensitivity on the upper surface of the base 2, which layer contains silver at the rate of approximately 7 gram per square meter ( Refer to Japanese Patent Public Disclosure No. 63-236035 ).

Fig. 3 shows the film 1 house in a photographic film cartridge 5. The film cartridge 5 includes a spool 6 and a cartridge case 7. The spool 6 is carried at its one end 6a in the cartridge case 7 for rotation about a longitudinal axis of the spool 6 and at its opposite end 6b so that the spool 6 can be rotated from the outside of the cartridge case 7. The film 1 is wound into a roll around the spool 6. The cartridge case 7 is provided with an outlet opening 8 for pulling the film 1 out of the cartridge case 7. The film 1 includes an area 9 to be exposed, an optical data-input region 10, an optical and magnetic data-input region 11 and perforations 12 for locating a frame of the film 1. The optical data-input region 10 is the region to which data is input by means of optical data-input means utilizing the sensitivity of the film 1.

Using the film 1 housed in the cartridge 5, the inputting of various kinds of data and the making of prints on the basis of the data are accomplished as follows:

1. Such data as the DX code and the date of producing a film are input no the optical and magnetic data-input region 11 when producing the films. The data is input in the form of letters or bar codes.
2. Such data as the date of photographing, presence of electronic flash and trimming information for alike-zooming are input to the optical data-input region 10 in the form of a bar code using LED provided with a camera.

3. Conditions for making prints are automatically set which adjust a change in the film after the passage of some time on the basis of data such as the date of producing the film, the date of photographing and the date of developing the film. Such setting conditions are automatically accomplished by means of a program set in advance within an automatic printer. This reduces deterioration in the quality of the printing to a minimum due to a change in the film after the passage of some time.

4. In the case of using an electronic flash, adjustment is automatically made to add yellow color to prints in accordance with the program set in the automatic printer. This causes adjustmemt of color, which is conventionally manually done, to be done automatically with the result that there is a decrease in color scattering in photographs taken with an electronic flash.

5. The automatic printer automatically accomplishes trimming when making prints in accordance with alike-zooming data. Even if trimming is accomplished, the date of photographing is printed on the lower corners of the prints. Thus, alike-zooming prints can be made automatically instead of manually and the date can be printed in the alike-zooming prints.

6. In a laboratory, conditions for making prints set forth in No. 3 and those adjusted in each frame are input magnetically to the optical and magnetic data-input region 11. This reduces the change in color in the case of developing as well as printing or in the case of second printing.

7. At a film developing shop, such data as the number of prints in a second printing and conditions for trimming are input to the optical and magnetic data-input region 11. This increases the efficiency of second printing at a laboratory.

As described above, the provision of the optical data-input means and the magnetic data-input means makes it possible to input various kinds of data not only when photographing but also after developing, so that quality of prints can be improved.

A photographic film cartridge usable in a method alternative to the invention is shown in Fig. 4. The cartridge 20 includes a cartridge case 21, a flexible wall portion 22 secured at its one edge to the cartridge case 21 and a spool 23 carried in the cartridge case 21 for rotation about a longitudinal axis thereof. The flexible wall portion 22 is provided at opposite ends with a pair of projections 24a, 24b which engage a cover-opening mechanism of a camera. A film 25 is tightly wound into a roll around the spool 23 and noose in the cartridge case 21. The film 25 is the same as the one shown in Fig. 3 ( Refer to Japanese Patent Application No. 63-57785 ).

When the cartridge 20 is loaded into a camera, the cover-opening mechanism of the camera engage the pair of projections 24a, 24b to lift them up. Since the cartridge 20 is fixedly loaded in the camera, as shown in Fig. 4, the flexible wall portion 22 is deformed upwardly to form an inlet opening 26 when the projections 24a, 24b are lifted up. Then, as the spool 23 is made to rotate in the film-feeding direction, that is the couterclockwise direction in the case of Fig. 4, the film 25 is fed out through the inlet opening 26 since the film 25 is tightly wound around the spool 23. Thus, the film 25 is led to a position to be exposed in the camera.

A magnetic tape 27 is attached as the magnetic data-input means to an outer surface of the cartridge case 21. For instance, a commercially available magnetic tape may be used as the tape 27.

The data concerning sensitivity of the film is input in advance to the magnetic tape 27 and is read out by suitable an input-output mechanism ( not shown ) of a camera when the cartridge 20 is loaded into the camera. In addition, data concerning the number of the exposed frames of the film is input to the tape 27 by the input-output mechanism of the camera when the cartridge 20 is taken out from the camera. This data enables the exposed frames of the film not to be fed when the cartridge provided with this data is loaded into the camera. Furthermore, this data enables the unexposed frames of the film to be fed to the position to be exposed when the film loaded in the cartridge contains several exposed frames.

The magnetic tape 27 may be replaced with EEPROM as the magnetic data-input means ( Refer to Japanese Patent Public Disclosure No. 62-116932 ). The EEPROM is provided with data such as the DX code, the consumption state of the film, photographic spot and so on. If data such as the conditions for making prints is input to the EEPROM at a laboratory, the data is available when second prints are made. In addition, such data as the number of second prints and conditions for trimming may be input to the EEPROM.

In this embodiment, a film may be used in which cellulose triacetate containing a magnetic material is used as a film base. In this arrangement, conditions of each frame for making prints are input to the EEPROM.

As described above with respect to the preferred embodiment, according to the invention various kinds of data can be input easily and definitely during the appropriate period.

## Claims

1. A method of storing information in a photographic film comprising a photosensitive region and a magnetic data storing means,
   the method comprising the steps of:

   exposing said film with frames (9), each of which having an area larger than 350mm$^2$ but smaller than 1200mm$^2$,

   utilizing the area not reserved for the frame exposure along the longitudinal margin of the film as an optical data storage region and storing optical data in said area at the time of taking photographs, and

   storing information in said magnetic data storing means at the time of the developing process of said film, said information regarding conditions for making prints.

2. The method of storing information according to claim 1, containing the step of restricting the area reserved for the frames to be exposed to an extent that the optical data input region has an area larger than 15% of the area of the frame.

3. The method of storing information according to claims 1 or 2, containing the further step of preparing the photographic film with only 1 to 4 perforations or notches per frame for locating the film during transportation of the camera to thereby increase the optical data input region.

4. The method of storing information according to claims 1 to 3, further containing the step of providing optically readable data for identifying the film in the widthwise direction of the film input at the time when the film is produced.

5. The method of storing information according to claim 1, wherein the conditions for making prints include at least one of the conditions for color correction, for trimming and the number of prints to be made.

## Patentansprüche

1. Verfahren zum Speichern von Information in einem fotografischen Film mit einem fotoempfindlichen Gebiet und einem magnetischen Datenspeichermittel,
   wobei das Verfahren die folgenden Schritte umfaßt:

   Belichten des Films mit Einzelbildern (9), von denen jedes eine Fläche größer als 350 mm$^2$, aber kleiner als 1200 mm$^2$ aufweist,

   Verwenden des nicht für die Einzelbildbelichtung reservierten Gebiets entlang des Längsrands des Films als ein optisches Datenspeichergebiet und Speichern optischer Daten in dem Gebiet zur Zeit der Aufnahme von Fotografien, und

Speichern von Information in dem magnetischen Datenspeichermittel zur Zeit des Entwicklungsvorgangs des Films, wobei die Information die Bedingungen zur Herstellung von Abzügen betrifft.

2. Verfahren zur Speicherung von Information gemäß Anspruch 1, mit dem Schritt des Beschränkens des zur Belichtung mit Einzelbildern reservierten Gebiets auf ein Ausmaß, das das optische Dateneingabegebiet eine Fläche von größer als 15 % des Gebiets des Einzelbilds aufweist.

3. Verfahren zur Speicherung von Information gemäß Anspruch 1 oder 2, mit dem weiteren Schritt des Herstellens des fotografischen Films mit nur 1 bis 4 Perforationen oder Kerben pro Einzelbild zum Lokalisieren des Films während des Transports durch die Kamera, um dadurch das optische Dateneingabegebiet zu erhöhen.

4. Verfahren zur Speicherung von Information gemäß den Ansprüchen 1 bis 3, weiter mit dem Schritt des Vorsehens von optisch lesbaren Daten in der Breitenrichtung des Films zur Identifikation des Films, die zu einer Zeit eingegeben werden, wenn der Film hergestellt wird.

5. Verfahren zur Speicherung von Information gemäß Anspruch 1, wobei die Bedingungen zum Anfertigen von Abzügen die Bedingungen für eine Farbkorrektur, für eine Größenanpassung und/oder die Anzahl der anzufertigenden Abzüge enthalten.

## Revendications

1. Procédé de mémorisation d'information dans un film photographique comprenant une région photosensible et un moyen magnétique de mémorisation de données ;

le procédé comprenant les étapes :

d'exposition dudit film par des vues (9) dont chacune a une superficie plus grande que 350 mm$^2$ mais plus petite que 1200 mm$^2$ ;
d'utilisation de la superficie non réservée pour l'exposition de vues le long de la marge longitudinale du film comme région de mémorisation de données optiques, et de mémorisation de données optiques dans ladite superficie au moment de la prise de photographie ; et
de mémorisation d'information dans ledit moyen magnétique de mémorisation de données, au moment du traitement de développement dudit film, ladite information concernant les conditions pour fabriquer des épreuves.

2. Procédé de mémorisation d'information selon la revendication 1, comprenant l'étape de limitation de la superficie réservée pour les vues à exposer à une étendue telle que la région d'entrée de données optiques ait une superficie plus grande que 15 % de la superficie de la vue.

3. Procédé de mémorisation d'information selon les revendications 1 ou 2, comportant l'étape supplémentaire de préparation du film photographique avec, par vue, seulement 1 à 4 perforations ou encoches, destinées à positionner le film pendant le défilement de la caméra, pour augmenter ainsi la région d'entrée de données optiques.

4. Procédé de mémorisation d'information selon la revendication 1 à 3, comportant en outre l'étape de mise en place, dans le sens de la largeur du film, de données, entrées au moment où le film est produit, lisibles optiquement, destinées à identifier le film.

5. Procédé de mémorisation d'information selon la revendication 1, dans lequel les conditions pour fabriquer des épreuves contiennent au moins l'une de conditions pour la correction de couleur, pour le massicotage et le nombre d'épreuves à fabriquer.

# FIG. 1

# FIG. 2

# FIG. 3

# FIG. 4